# EUROPEAN PATENT APPLICATION

(11) **EP 3 992 738 A1**
(43) Date of publication of application: **04.05.2022**
(21) Application number: 21190986.6
(22) Date of filing: 12.08.2021
(51) Int. Cl.: G05B 19/418, G01N 21/91

(54) **FLUORESCENT INSPECTION VISUAL DATA PROCESSING SYSTEM AND PROCESSING METHOD THEREOF BASED ON MES**

(30) Priority: 29.10.2020 CN 202011181236
(71) Applicant: Oriental Bluesky Titanium Technology Co. Ltd, Yantai Hi-tech Industrial Development Zone Yantai Shandong 264000 (CN)
(72) Inventor: QIAN, Yu, Shandong, 264000 (CN); LIU, Gaofeng, Shandong, 264000 (CN); JIANG, Bin, Shandong, 264000 (CN); LI, Xia, Shandong, 264000 (CN); WANG, Wenzhi, Shandong, 264000 (CN)
(74) Representative: Ipside

(57) **Abstract**

A fluorescent inspection visual data processing system and a processing method thereof based on an MES belong to the field of fluorescent inspection technologies. The present invention provides a fluorescent inspection visual data processing system and a processing method thereof based on an MES, which are time-saving and highly efficient and can be used to automatically record defect signal data and avoid manual rechecking. In the present invention, an MES system is configured to perform production scheduling based on production scheduling information; a database is configured to receive information about a batch of parts to be inspected pushed by the MES system, and extract structured data; an intelligent fluorescent inspection visual device is configured to automatically select a corresponding working mode based on a key field of the structured data, and automatically sort a part, and a data collection server stores test data and performs statistical analysis; and the data collection server is configured to perform real-time monitoring on a status of the test data according to a user preset rule, and control, in real time based on a monitoring result, whether to trigger a warning apparatus of the intelligent fluorescent inspection visual device. The present invention is mainly used for performing fluorescent inspection on parts.

## Description

### Technical Field

The present invention belongs to the field of fluorescent inspection technologies, and in particular relates to a fluorescent inspection visual data processing system and a processing method thereof based on a manufacturing execution system (MES).

### Background Art

Defects of discontinuities such as cracks, corrosion, and holes of working mechanical parts severely threaten safety and reliability of existing mechanical devices, in that the defects on the surface can cause countless accidents of failure and fracture of the parts. Therefore, dedicated fluorescent penetrant inspection standards are established in one country after another, and some large automated fluorescent inspection devices are developed and applied. For example, an intelligent fluorescent magnetic particle inspection system has been developed in Southwest University of Science and Technology of China. The system uses a mechanical apparatus with a conveyor belt, a specialised magnetic particle detector, and a charge-coupled device (CCD) vision camera technology, and can be linked to a product production line, thereby implementing synchronisation between parts detection and production. An aerospace fastener manufacturing company of China has independently developed an intelligent fluorescent inspection visual recognition system. The system uses a visual positioning technology, an ABB robot technology, a CCD vision camera technology, and the like, and is applicable to various types of metal fasteners for 360° omnidirectional defect detection. Fluorescent inspection is a non-destructive inspection method for detecting defects on the surface of parts. After parts to be inspected are put into an inspection device and undergo a sequence of processing, yellow and green signals are displayed at the defects on the surface of the parts. In the process of fluorescent inspection on key parts products, to more accurately obtain display of all subtle defects on the surface of parts, a visual recognition device is usually required to inspect the surface of the parts. After the visual inspection, the device performs material sorting and screening based on whether there is display of a defect on the surface of the parts. When a defect display signal is visually recognised, the parts are automatically sorted to a defective product area; or when no defect display signal is recognised, the parts are sorted to a non-defective product area. After the parts to be inspected are all visually inspected, an inspector only rechecks all the defective parts products.

At present, manually operated fluorescent inspection devices are gradually replaced with automated devices, and particularly, intelligent inspection of defect trace display has been achieved. However, because of complicated characteristics of fluorescent inspection processing, the display of defect traces on the surface of parts processed by different processing techniques may be in different states, which may be circular, linear, dotted, or the like. At present, an automated fluorescent inspection device can implement automatic screening based on the display of defect traces, that is, parts with no inspected display are screened as non-defective products, and parts with display of defects are screened as defective products, but the device cannot distinguish between states of display of defect traces, so that a product with display of a defect of any state is treated as a defective product. Then an inspector rechecks and verifies the product with the eyes. Although this manner of pre-inspection by using an automated device improves inspection efficiency, further improvement is necessary in the aspects of a data collection mode, a data management method, a warning mechanism, and the like.

In an existing process of automated fluorescent inspection, parts to be inspected are sorted to be non-defective products or defective products in the manner of pre-inspection by using an automated device, and then an inspector performs rechecking and verification based on states of display of defect traces on the defective products. When a large number of parts are to be inspected, if the parts have systematic quality problems, a proportion of products screened as defective products by an automated inspection device is relatively high, and subsequent manual rechecking thereof not only takes a great amount of time, but also is prone to bring errors in manually recording a large amount of defect signal data. A data management manner in the inspection process is oversimplified, and there lacks intelligent management.

Therefore, there is a need for a fluorescent inspection visual data processing system and a processing method thereof based on an MES, which are time-saving and highly efficient and can be used to automatically record defect signal data and avoid manual rechecking.

### Summary of the Invention

To overcome the drawbacks of an existing fluorescent inspection system that manual rechecking, much time, and much labour are required in recording defect information, the present invention provides a fluorescent inspection visual data processing system and a processing method thereof based on an MES, which are time-saving and highly efficient and can be used to automatically record defect signal data and avoid manual rechecking.

The technical solution of the present invention is as follows.

A fluorescent inspection visual data processing system based on an MES in the present invention comprises an MES system, a database, an intelligent fluorescent inspection visual device, and a data collection server, wherein
the MES system is configured to transmit information about a batch of parts to be inspected to the database, and is configured to access real-time data information collected by the data collection server;
the database is configured to receive the information about the batch of parts to be inspected pushed by the MES system, extract structured data based on a feature of the information about the batch of parts to be inspected, and automatically push the structured data to the intelligent fluorescent inspection visual device;
the intelligent fluorescent inspection visual device is configured to receive the structured data pushed from the database, automatically select a corresponding working mode based on a key field of the structured data, and automatically sort a part based on a fluorescent display signal state, wherein the intelligent fluorescent inspection visual device automatically transmits test data generated in an operation process to the data collection server to be stored, and the MES system performs statistical analysis on the test data; and
the data collection server is configured to perform real-time monitoring on a status of the test data according to a user preset rule, and control, in real time based on a monitoring result, whether to trigger a warning apparatus of the intelligent fluorescent inspection visual device.

Further, the intelligent fluorescent inspection visual device comprises a visual positioning system, an ABB robot module, and a CCD camera module, wherein
the visual positioning system is configured to send placement attitude information of the part to the ABB robot;
the ABB robot is configured to automatically pick up a corresponding part based on the current placement attitude information of the part, and pass the part to the CCD camera; and
the CCD camera is configured to perform real-time monitoring on all fluorescent display signal states on the surface of the part, wherein the data collection server automatically sorts a part to be a defective product or a non-defective product based on the fluorescent display signal states.

Further, when parts to be inspected are recognised by using the CCD camera, the CCD camera automatically triggers the data collection server to perform statistics collection.

Further, the data collection server has a customised data monitoring function, to perform real-time monitoring on the status of the test data according to the user preset rule and set a warning level threshold for a user, wherein when the number of defective products transmitted in real time by the intelligent fluorescent inspection visual device to the data collection server is less than the threshold, the intelligent fluorescent inspection visual device keeps working; or when the number of defective products transmitted in real time is equal to or greater than the threshold, the data collection server triggers the warning apparatus of the intelligent fluorescent inspection visual device, and suspends working of the intelligent fluorescent inspection visual device; and the warning apparatus initiates online confirmation of verification information for a fluorescent display picture of the defective product by using the MES system, and an inspector performs verification, thereby controlling whether the intelligent fluorescent inspection visual device continues working.

Further, the test data comprises fluorescent display pictures at different positions of the parts to be inspected, the number of parts with no fluorescent display, the number of parts with fluorescent display, and a personalised analysis chart, and the test data is in a common data format.

Further, the information about the batch of parts to be inspected comprises a batch number, a process name, and specifications.

Further, the working mode comprises setting of a visual positioning system parameter, setting of an ABB robot module parameter, and setting of a CCD camera module parameter.

A processing method for a fluorescent inspection visual data processing system based on an MES described in the present invention comprises the following steps:
S1: transmitting, by an MES system, information about a batch of parts to be inspected to a database, and simultaneously accessing, by the MES system, real-time data information collected by a data collection server;
S2: receiving, by the database, the information about the batch of parts to be inspected pushed by the MES system, extracting structured data based on a feature of the information about the parts, and automatically pushing the structured data to an intelligent fluorescent inspection visual device;
S3: receiving, by the intelligent fluorescent inspection visual device, the structured data pushed from the database, then automatically selecting a corresponding working mode based on a key field of the structured data, and automatically sorting a part to be a non-defective product or a defective product based on a fluorescent display signal state;
S4: automatically transmitting, by the intelligent fluorescent inspection visual device, test data generated in an operation process to the data collection server to be stored, wherein the test data is in a common data format, and can be transmitted to the MES system to perform statistical analysis; and
S5: customising, by the data collection server, a data monitoring function, performing real-time monitoring on a status of the test data according to a user preset rule, and controlling, based on the current number of defective products received by the data collection server, whether the intelligent fluorescent inspection visual device continues working.

Further, in S3, the intelligent fluorescent inspection visual device comprises a visual positioning system, an ABB robot module, and a CCD camera module; after the working mode is activated, the visual positioning system puts a part to be inspected into a specified position in a manner of flexible vibration, and sends placement attitude information of the part to an ABB robot; the ABB robot automatically picks up a corresponding part based on the placement attitude information of the part, and passes the part to the CCD camera; and the CCD camera performs real-time monitoring on all fluorescent display signal states on the surface of the part, wherein when the part to be inspected is recognised by using the CCD camera, the CCD camera automatically triggers the data collection server to perform statistics collection.

Further, in S5, a warning level threshold is preset for a user, wherein when the number of defective products transmitted in real time by the intelligent fluorescent inspection visual device to the data collection server is less than the threshold, the intelligent fluorescent inspection visual device keeps working; or when the number of defective products transmitted in real time is equal to or greater than the threshold, the data collection server triggers the warning apparatus of the intelligent fluorescent inspection visual device, and suspends working of the intelligent fluorescent inspection visual device; and an inspector performs online confirmation for a fluorescent display picture of the defective product by using the MES system, and controls the intelligent fluorescent inspection visual device to perform corresponding working.

The beneficial effects of the present invention are as follows.

According to the fluorescent inspection visual data processing system and a processing method thereof based on an MES in the present invention, a visual recognition device is integrated with an MES (manufacturing execution system) system. The MES system pushes a drive instruction to the visual recognition device, and enables the visual recognition device to automatically perform a visual inspection operation. Test data collected in the visual inspection process is fed back in real time to the MES system, thereby implementing closed-loop management of the inspection process. An inspector can monitor the visual inspection process in real time via the MES system, and can perform online management of a testing progress, a proportion of abnormal parts, a warning mechanism, and the like based on actual needs. The MES system a platform may be used to coordinate and control an automated fluorescent inspection device and an inspector, so that a fast data processing capability in an inspection process is improved, thereby helping make fluorescent inspection more intelligent. The automated fluorescent inspection device is integrated with the MES system, so that the MES system is used to manage and control the device, and may perform real-time tracking and monitoring in the inspection process with a high degree of management intelligence. Through a working instruction sent by the MES system, the device automatically adjusts a working parameter and starts to operate, process data is automatically uploaded to the MES system to be stored, and intelligent management is performed in the inspection process. The inspector can set a corresponding warning mechanism based on a product feature. When the device continuously recognises a specific number of defective products, working of the device is suspended, and defect display pictures of the continuously recognised defective products are sent to the MES system and are assessed online by the inspector. The device performs corresponding working, for example, continuing or stopping working, based on an assessment result of the inspector. According to the data processing method in the present invention integrated with the MES system, intelligent management of fluorescent inspection visual data may be implemented. All test data is automatically uploaded to the system for storage, statistics collection, and analysis, and defect signal data processing by an inspector online can be supported, thereby improving the efficiency and quality of testing.

### Brief Description of the Drawings

FIG. 1 is a schematic diagram of a processing procedure of a fluorescent inspection visual data processing system based on an MES according to the present invention;
FIG. 2 is a schematic structural diagram of an intelligent fluorescent inspection visual device; and
FIG. 3 is a flowchart of a test data monitoring process.

In the figures, 1 represents a CCD camera, 2 represents an ABB robot, and 3 represents a visual positioning system.

### Detailed Description of Embodiments

The following further describes the technical solution of the present invention in conjunction with embodiments, but this is not limited thereto. Any modification or equivalent replacement made to the technical solution of the present invention without departing from the spirit and scope of the technical solution of the present invention shall fall within the protection scope of the present invention.

### Embodiment 1

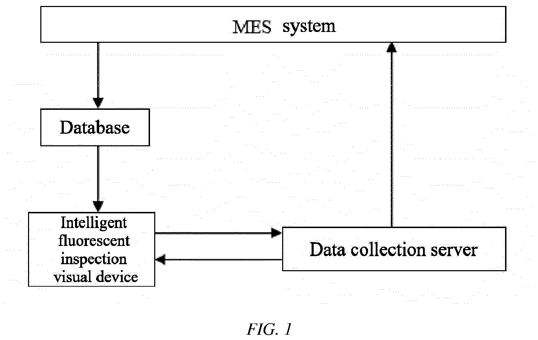

This embodiment is described in conjunction with FIG. 1. In this embodiment, a fluorescent inspection visual data processing system based on an MES according to the embodiments comprises an MES system, a database, an intelligent fluorescent inspection visual device, and a data collection server.

The MES system is configured to perform production scheduling based on production scheduling information, and transmit information about a batch of parts to be inspected to the database; and is configured to access real-time data information collected by the data collection server. The MES (manufacturing execution system) system performs production scheduling based on the production scheduling information, and transmits the information about the batch of parts to be inspected to the database. The MES system is also configured to access real-time data information collected by the data collection server, and the production scheduling information is obtained through summarisation and conclusion of historical production information.

The database is configured to receive the information about the batch of parts to be inspected pushed by the MES system, extract structured data based on a feature of the information about the batch of parts to be inspected, and automatically push the structured data to the intelligent fluorescent inspection visual device. The database is responsible for receiving the information about the batch of parts to be inspected pushed by the MES system, extracting structured data, for example, a batch number, a process name, specifications, and another parameter, based on a feature of the information about the parts, and automatically push the structured data to an intelligent device.

The intelligent fluorescent inspection visual device is configured to receive the structured data pushed from the database, automatically select a corresponding working mode based on a key field of the structured data, automatically sort a part based on a fluorescent display signal state, and automatically transmit test data to the data collection server to be stored, wherein the intelligent fluorescent inspection visual device automatically transmits test data generated in an operation process to the MES system to perform statistical analysis on the test data.

The data collection server is configured to perform real-time monitoring on a status of the test data according to a user preset rule, and control, in real time based on a monitoring result, whether to trigger a warning apparatus of the intelligent fluorescent inspection visual device.

### Embodiment 2

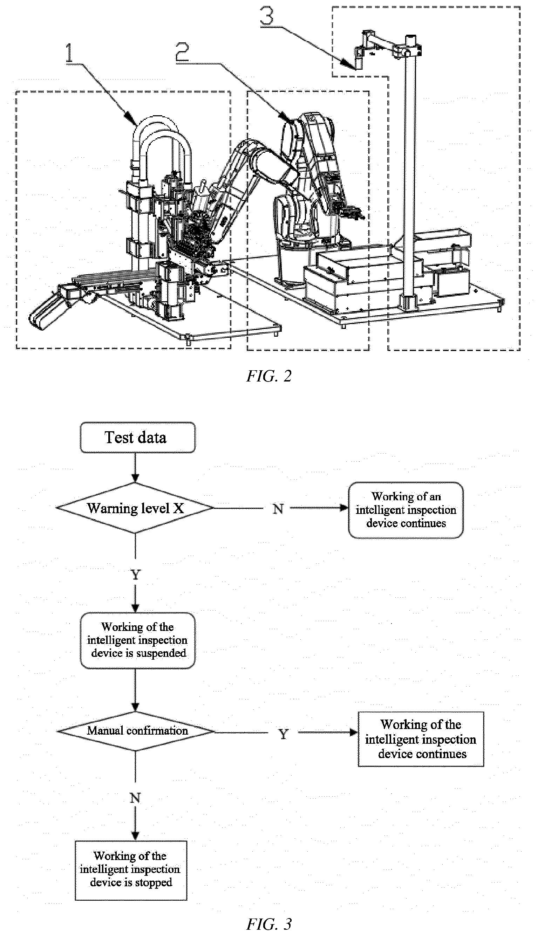

This embodiment is described in conjunction with FIG. 2 and Embodiment 1. In this embodiment, the fluorescent inspection visual data processing system based on an MES according to the embodiments is provided. The intelligent fluorescent inspection visual device comprises a visual positioning system 3, an ABB robot 2 module, and a CCD camera 1 module, wherein
the visual positioning system 3 is configured to send placement attitude information of the part to the ABB robot 2;
the ABB robot 2 is configured to automatically pick up a corresponding part based on the current placement attitude information of the part, and pass the part to the CCD camera 1; and
the CCD camera 1 is configured to perform real-time monitoring on all fluorescent display signal states on the surface of the part, wherein the data collection server automatically sorts a part to be a defective product or a non-defective product based on the fluorescent display signal states. After receiving structured data pushed from a database, a PLC of the intelligent fluorescent inspection visual device automatically selects a corresponding working mode based on a key field of the structured data. When parts to be inspected are recognised by using the CCD camera 1, the CCD camera 1 automatically triggers the data collection server to perform statistics collection.

### Embodiment 3

This embodiment is described in conjunction with FIG. 3 and Embodiment 1. In this embodiment, the fluorescent inspection visual data processing system based on an MES according to the embodiments is provided. The data collection server has a customised data monitoring function, to perform real-time monitoring on the status of the test data according to the user preset rule and set a warning level threshold for a user, wherein when the number of defective products transmitted in real time by the intelligent fluorescent inspection visual device to the data collection server is less than the threshold, the intelligent fluorescent inspection visual device keeps working; or when the number of defective products transmitted in real time is equal to or greater than the threshold, the data collection server triggers the warning apparatus of the intelligent fluorescent inspection visual device, and suspends working of the intelligent fluorescent inspection visual device; and the warning apparatus initiates online confirmation of verification information for a fluorescent display picture of the defective product by using the MES system, and an inspector performs verification, thereby controlling whether the intelligent fluorescent inspection visual device continues working. The test data generated in the operation process of the intelligent fluorescent inspection visual device is automatically transmitted to the data collection server to be stored. The data collection server has a customised data monitoring function, to perform real-time monitoring on the status of the test data according to the user preset rule. When a user sets a warning level as X, when the number of defective products transmitted in real time by the intelligent fluorescent inspection visual device to the data collection server is less than X, the intelligent fluorescent inspection visual device keeps working; or when the number of defective products transmitted in real time reaches X, the data collection server triggers the warning apparatus of the intelligent fluorescent inspection visual device, and suspends working of the intelligent fluorescent inspection visual device. An inspector performs online confirmation for a fluorescent display picture of the defective product by using the MES system, and after the confirmation, the inspector may trigger either of two instructions "stopping" and "continuing" to enable the intelligent fluorescent inspection visual device to perform corresponding working. A specific process is shown in FIG. 3.

### Embodiment 4

This embodiment is described in conjunction with Embodiment 1. In this embodiment, the fluorescent inspection visual data processing system based on an MES according to the embodiments is provided. The test data comprises fluorescent display pictures at different positions of the parts to be inspected, the number of parts with no fluorescent display (the number of non-defective products), the number of parts with fluorescent display (the number of defective products), and a personalised analysis chart, and the test data is in a common data format and may be transmitted to the MES system to perform statistical analysis. The information about the batch of parts to be inspected comprises a batch number, a process name, and specifications.

### Embodiment 5

This embodiment is described in conjunction with Embodiment 1. In this embodiment, the fluorescent inspection visual data processing system based on an MES according to the embodiments is provided. The working mode comprises setting of a visual positioning system 3 parameter, setting of an ABB robot 2 module parameter, and setting of a CCD camera 1 module parameter. After the working mode is activated, the visual positioning system 3 puts a number of parts to be inspected into specified positions in a manner of flexible vibration, and sends placement attitude information of the parts to the ABB robot 2; the ABB robot 2 automatically picks up corresponding parts based on the attitude information of the parts, and passes the parts to the CCD camera 1; and the CCD camera 1 performs real-time monitoring on all fluorescent display signal states on the surfaces of the parts, and automatically sorts the parts to be non-defective products or defective products based on the fluorescent display signal states.

### Embodiment 6

This embodiment is described in conjunction with Embodiment 1. In this embodiment, a processing method for a fluorescent inspection visual data processing system based on an MES according to the embodiments comprises steps as follows.
S1: performing, by the MES system, production scheduling based on production scheduling information, and transmitting information about a batch of parts to be inspected to a database, and simultaneously accessing, by the MES system, real-time data information collected by a data collection server;
S2: receiving, by the database, the information about the batch of parts to be inspected pushed by the MES system, extracting structured data based on a feature of the information about the parts, and automatically pushing the structured data to an intelligent fluorescent inspection visual device;
S3: receiving, by the intelligent fluorescent inspection visual device, the structured data pushed from the database, then automatically selecting a corresponding working mode based on a key field of the structured data, and automatically sorting a part to be a non-defective product or a defective product based on a fluorescent display signal state;
S4: automatically transmitting, by the intelligent fluorescent inspection visual device, test data generated in an operation process to the data collection server to be stored, wherein the test data is in a common data format, and can be transmitted to the MES system to perform statistical analysis; and
S5: customising, by the data collection server, a data monitoring function, performing real-time monitoring on a status of the test data according to a user preset rule, and controlling, based on the current number of defective products received by the data collection server, whether the intelligent fluorescent inspection visual device continues working.

### Embodiment 7

This embodiment is described in conjunction with Embodiment 6. In this embodiment, the processing method for a fluorescent inspection visual data processing system based on an MES according to the embodiments is provided. In S3, the intelligent fluorescent inspection visual device comprises a visual positioning system 3, an ABB robot 2 module, and a CCD camera 1 module; after the working mode is activated, the visual positioning system 3 puts parts to be inspected into a specified position in a manner of flexible vibration, and sends placement attitude information of the part to the ABB robot 2; the ABB robot 2 automatically picks up a corresponding part based on the placement attitude information of the part, and passes the part to the CCD camera 1; and the CCD camera 1 performs real-time monitoring on all fluorescent display signal states on the surface of the part, wherein when the part to be inspected is recognised by using the CCD camera 1, the CCD camera 1 automatically triggers the data collection server to perform statistics collection.

### Embodiment 8

This embodiment is described in conjunction with Embodiment 6. In this embodiment, the processing method for a fluorescent inspection visual data processing system based on an MES according to the embodiments is provided. In S5, a warning level threshold is preset for a user, wherein when the number of defective products transmitted in real time by the intelligent fluorescent inspection visual device to the data collection server is less than the threshold, the intelligent fluorescent inspection visual device keeps working; or when the number of defective products transmitted in real time is equal to or greater than the threshold, the data collection server triggers the warning apparatus of the intelligent fluorescent inspection visual device, and suspends working of the intelligent fluorescent inspection visual device; and an inspector performs online confirmation for a fluorescent display picture of the defective product by using the MES system, and controls the intelligent fluorescent inspection visual device to perform corresponding working.

## Claims

1. A fluorescent inspection visual data processing system based on an MES, **characterized in that** the system comprises an MES system, a database, an intelligent fluorescent inspection visual device, and a data collection server, wherein
the MES system is configured to transmit information about a batch of parts to be inspected to the database, and is configured to access real-time data information collected by the data collection server;
the database is configured to receive the information about the batch of parts to be inspected pushed by the MES system, extract structured data based on a feature of the information about the batch of parts to be inspected, and automatically push the structured data to the intelligent fluorescent inspection visual device;
the intelligent fluorescent inspection visual device is configured to receive the structured data pushed from the database, automatically select a corresponding working mode based on a key field of the structured data, and automatically sort a part based on a fluorescent display signal state, wherein the intelligent fluorescent inspection visual device automatically transmits test data generated in an operation process to the data collection server to be stored, and the MES system performs statistical analysis on the test data; and the data collection server is configured to perform real-time monitoring on a status of the test data according to a user preset rule, and control, in real time based on a monitoring result, whether to trigger a warning apparatus of the intelligent fluorescent inspection visual device.

2. The fluorescent inspection visual data processing system based on an MES according to claim 1, **characterized in that** the intelligent fluorescent inspection visual device comprises a visual positioning system, an ABB robot module, and a CCD camera module, wherein
the visual positioning system is configured to send placement attitude information of the part to the ABB robot;
the ABB robot is configured to automatically pick up a corresponding part based on the current placement attitude information of the part, and pass the part to the CCD camera; and
the CCD camera is configured to perform real-time monitoring on all fluorescent display signal states on the surface of the part, wherein the data collection server automatically sorts a part to be a defective product or a non-defective product based on the fluorescent display signal states.

3. The fluorescent inspection visual data processing system based on an MES according to claim 2, **characterized in that** when parts to be inspected are recognised by using the CCD camera, the CCD camera automatically triggers the data collection server to perform statistics collection.

4. The fluorescent inspection visual data processing system based on an MES according to claim 1, **characterized in that** the data collection server has a customised data monitoring function, to perform real-time monitoring on the status of the test data according to the user preset rule and set a warning level threshold for a user, wherein when the number of defective products transmitted in real time by the intelligent fluorescent inspection visual device to the data collection server is less than the threshold, the intelligent fluorescent inspection visual device keeps working; or when the number of defective products transmitted in real time is equal to or greater than the threshold, the data collection server triggers the warning apparatus of the intelligent fluorescent inspection visual device, and suspends working of the intelligent fluorescent inspection visual device; and the warning apparatus initiates online confirmation of verification information for a fluorescent display picture of the defective product by using the MES system, and an inspector performs verification, thereby controlling whether the intelligent fluorescent inspection visual device continues working.

5. The fluorescent inspection visual data processing system based on an MES according to claim 1, **characterized in that** the test data comprises fluorescent display pictures at different positions of the parts to be inspected, the number of parts with no fluorescent display, the number of parts with fluorescent display, and a personalised analysis chart, and the test data is in a common data format.

6. The fluorescent inspection visual data processing system based on an MES according to claim 1, **characterized in that** the information about the batch of parts to be inspected comprises a batch number, a process name, and specifications.

7. The fluorescent inspection visual data processing system based on an MES according to claim 1, **characterized in that** the working mode comprises setting of a visual positioning system parameter, setting of an ABB robot module parameter, and setting of a CCD camera module parameter.

8. A processing method for a fluorescent inspection visual data processing system based on an MES, **characterized in that** the method comprises the following steps:
S1: transmitting, by an MES system, information about a batch of parts to be inspected to a database, and simultaneously accessing, by the MES system, real-time data information collected by a data collection server;
S2: receiving, by the database, the information about the batch of parts to be inspected pushed by the MES system, extracting structured data based on a feature of the information about the parts, and automatically pushing the structured data to an intelligent fluorescent inspection visual device;
S3: receiving, by the intelligent fluorescent inspection visual device, the structured data pushed from the database, then automatically selecting a corresponding working mode based on a key field of the structured data, and automatically sorting a part to be a non-defective product or a defective product based on a fluorescent display signal state;
S4: automatically transmitting, by the intelligent fluorescent inspection visual device, test data generated in an operation process to the data collection server to be stored, wherein the test data is in a common data format, and can be transmitted to the MES system to perform statistical analysis; and
S5: customising, by the data collection server, a data monitoring function, performing real-time monitoring on a status of the test data according to a user preset rule, and controlling, based on the current number of defective products received by the data collection server, whether the intelligent fluorescent inspection visual device continues working.

9. The processing method for a fluorescent inspection visual data processing system based on an MES according to claim 8, **characterized in that** in S3, the intelligent fluorescent inspection visual device comprises a visual positioning system, an ABB robot module, and a CCD camera module; after the working mode is activated, the visual positioning system puts a part to be inspected into a specified position in a manner of flexible vibration, and sends placement attitude information of the part to an ABB robot; the ABB robot automatically picks up a corresponding part based on the placement attitude information of the part, and passes the part to the CCD camera; and the CCD camera performs real-time monitoring on all fluorescent display signal states on the surface of the part, wherein when the part to be inspected is recognised by using the CCD camera, the CCD camera automatically triggers the data collection server to perform statistics collection.

10. The processing method for a fluorescent inspection visual data processing system based on an MES according to claim 8, **characterized in that** in S5, a warning level threshold is preset for a user, wherein when the number of defective products transmitted in real time by the intelligent fluorescent inspection visual device to the data collection server is less than the threshold, the intelligent fluorescent inspection visual device keeps working; or when the number of defective products transmitted in real time is equal to or greater than the threshold, the data collection server triggers the warning apparatus of the intelligent fluorescent inspection visual device, and suspends working of the intelligent fluorescent inspection visual device; and an inspector performs online confirmation for a fluorescent display picture of the defective product by using the MES system, and controls the intelligent fluorescent inspection visual device to perform corresponding working.
